(19) Europäisches Patentamt
European Patent Office
Office européen des brevets

(11) Veröffentlichungsnummer: **0 161 470**
**B1**

(12) # EUROPÄISCHE PATENTSCHRIFT

(45) Veröffentlichungstag der Patentschrift: **20.07.88**

(51) Int. Cl.⁴: **B 01 D 53/36**

(21) Anmeldenummer: **85104159.0**

(22) Anmeldetag: **04.04.85**

(54) **Verfahren und Vorrichtung zur Entfernung unerwünschter gasförmiger Bestandteile aus einem Rauchgas.**

(30) Priorität: **05.04.84 DE 3412870**
**15.02.85 DE 3505354**

(43) Veröffentlichungstag der Anmeldung:
**21.11.85 Patentblatt 85/47**

(45) Bekanntmachung des Hinweises auf die Patenterteilung:
**20.07.88 Patentblatt 88/29**

(84) Benannte Vertragsstaaten:
**AT BE CH DE FR GB IT LI NL**

(56) Entgegenhaltungen:
**DE-A-3 117 077**
**FR-A-2 304 389**
**US-A-2 946 651**

(73) Patentinhaber: **Linde Aktiengesellschaft, Abraham-Lincoln- Strasse 21, D-6200 Wiesbaden (DE)**

(72) Erfinder: **Linde, Gerhard, Dr. Ing., Eichleite 50, D-8022 Gründwald (DE)**
Erfinder: **Kristof, Wolfgang, Dr. rer. nat., Herzog-Ludwig- Strasse 14a, D-8223 Trostberg (DE)**
Erfinder: **Schliebener, Claus, Dr. rer. nat., Hugo-Hofmann- Strasse 36, D-8021 Strasslach (DE)**

(74) Vertreter: **Schaefer, Gerhard, Dr., Linde Aktiengesellschaft Zentrale Patentabteilung, D-8023 Höllriegelskreuth (DE)**

**EP 0 161 470 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Entfernung von Stickoxiden aus einem bei der Verbrennung anfallenden Rauchgas.

Die Erfindung betrifft weiter eine Vorrichtung zur Entfernung von Stickoxiden aus einem bei einer Verbrennung anfallenden Rauchgas mit einem Katalysatorbett und mindestens einem dem Katalysatorbett nachgeschalteten Regenerator, wobei das Katalysatorbett mit mindestens einer $NH_3$-Zuleitung verbunden ist, und die Regeneratoren eine keramische Wärmespeichermasse aufweisen.

Das Problem der Entfernung unerwünschter gasförmiger Bestandteile aus Verbrennungsgasen gewinnt zunehmend an Bedeutung. Diese Verbrennungs- oder Rauchgase entstehen in der Regel durch Verbrennung von kohlenstoffhaltigen Brennstoffen, wie Öl, Kohle oder Erdgas, aber auch bei der Verbrennung von Wasserstoff, wenn diese in Gegenwart von Luft durchgeführt. Die Entfernung von gegebenenfalls vorhandenen Schwefelverbindungen, insbesondere Schwefeldioxid, kann dabei nach Abkühlung und falls erforderlich Vorreinigung (insbesondere Staub- und Rußabscheidung sowie gegebenenfalls Entfernung von H und HCl) in günstiger Weise mittels eines physikalisch wirkenden Absorptionsmittels durchgeführt werden. Dabei wird nahezu das gesamte ursprünglich im Rauchgas enthaltene Schwefeldioxid ausgewaschen. Ein derartiges Verfahren ist beispielsweise in der DE-A-2 848 721 oder DE-A-3 237 387 beschrieben.

Dieses bekannte Verfahren dient jedoch nur zur Entfernung von Schwefeldioxid. In vielen Fällen enthalt das Rauchgas aber noch weitere Bestandteile, die nicht in die Atmosphäre gelangen dürfen wie insbesondere Stickoxide.

Zur Entfernung von Stickoxiden sind bereits katalytische verfahren bekannt, bei denen $NO_2$ oder NO in Gegenwart von Ammoniak gemäß

$$4\,NH_3 + 4\,NO + O_2 \xrightarrow{\text{Katalysator}} 4\,N_2 + 6\,H_2O$$ bzw.

$$4\,NH_3 + 2\,NO_2 + O_2 \xrightarrow{\text{Katalysator}} 3\,N_2 + 6\,H_2O$$

Bei hohen Temperaturen zwischen ca. 300 und 450°C zu unschädlichem $N_2$ und Wasser reduziert werden, die an die Atmosphäre abgegeben werden dürfen. Ein derartiges Verfahren ist beispielsweise aus der DE-A-3 117 077 bekannt.

Dabei wird in üblicher Weise der Katalysator im rohen Rauchgasstrom angeordnet, d. h. bei hohem Staubgehalt, hohem $SO_2$- und $SO_3$-Gehalt. Um ein derartiges Gas von $NO_x$ zu befreien, müssen daher wabenförmige Katalysotorbetten in Behältern untergebracht werden. Der Betrieb in Gegenwart der Verunreinigungen bedingt dabei eine nur relativ kurze Lebensdauer des Katalysators. Ein weiterer Nachteil des bekannten Verfahrens zur $NO_x$-Entfernung besteht darin, daß bei Spitzenbelastung die Regelung der zuzusetzenden $NH_3$-Menge sehr schwierig ist, da bei Änderung der Rauchgasmenge gleichzeitig die Temperatur im Katalysatorbett schwankt, worauf die Selektivität des Katalysators sehr empfindlich reagiert.

Der vorliegenden Erfindung liegt daher die Aufgabe zugrunde, ein Verfahren zur Entfernung von Stickoxiden aus Rauchgasen so zu verbessern, daß die aufgezeigten Nachteile bekannter Verfahren überwunden und gleichzeitig die Energiekosten gesenkt werden.

Diese Aufgabe wird erfindungsgemäß durch die Merkmale des Anspruch 1 gelöst.

Die Erfindung beruht auf der Erkenntnis, daß die zur Umwandlung von Stickoxiden verwendeten Katalysatoren dann eine erhöhte Lebensdauer besitzen, wenn von ihnen Verunreinigungen wie $SO_2$, $SO_3$, HCl, HF, Staub und Ruß weitgehend ferngehalten werden. Dies erfolgt mit dem erfindungsgemäßen Verfahren, bei dem in einem ersten Schritt diese Verunreinigungen aus dem Rauchgas abgetrennt werden, das dann in einem zweiten Schritt der $NO_x$-Abtrennung unterworfen wird. Da die gegebenenfalls erforderliche $SO_2$-Abtrennung gewöhnlich bei Temperaturen stattfindet, die wesentlich unter denen zur katalytischen $NO_x$-Umwandlung erforderlichen liegen, muß das Rauchgas angewärmt werden. Erfindungsgemäß erfolgt diese Anwärmung in Regeneratoren die durch das heiße $NO_x$-freie Rauchgas erwärmt werden und diese Wärme wiederum auf das anzuwärmende $NO_x$-haltige Rauchgas abgeben. Auf diese Weise kann ohne großen Energieaufwand eine ausreichende Aufheizung des Rauchgases gewährleistet werden.

Die Regeneratoren können in bevorzugter Weise zyklisch umgeschaltet werden. Dies bedeutet, daß das Rauchgas zur Abkühlung durch einen in einem vorangegangenen Schaltzyklus vom Rauchgas durchströmten und hierdurch abgekühlten Regenerator geleitet wird, wodurch die Wärmespeichermasse wieder angewärmt wird.

Wie bekannt ist, wird ein Regenerator von einem heißen Gas durchströmt, das seinen Wärmeinhalt auf die Speichermasse, z .B. Steine, des Regenerators überträgt. Nach einer gewissen Zeit wird der Regenerator umgeschaltet. Vom kalten Ende her werden nun Gase in den Regenerator eingeblasen und nehmen die im Regenerator gespeicherte Wärme auf.

Als Wärmespeichermasse wird keramische Masse eingesetzt, die einen möglichst vollständigen Wärmeaustausch sicherstellt. Diese keramische Masse kann dabei zumindest teilweise selbst als Katalysatormasse verwendet werden.

Das heiße Rauchgas wird dann über den Katalysator geleitet, so daß die bereits erwähnten Reaktionen stattfinden können. Dabei wird insbesondere die erstgenannte Reaktion

auftreten, da in dem Rauchgas meist über 90 % NO und der Rest $NO_2$ enthalten sind. Das bei der katalytischen Umwandlung entstehende $N_2$ und Wasser bzw. bei den hohen Temperaturen Wasserdampf sind ungefährlich und können ohne Bedenken in die Atmosphäre abgegeben werden.

Das heiße gereinigte Gas gibt dann seine Wärme an einen in einem vorangegangenen Zyklus zur Erwärmung von $NO_x$-haltigem Rauchgas verwendeten Regenerator ab, so daß dieser Regenerator in einem weiteren Zyklus wieder zur Anwärmung des Rauchgases zur Verfügung steht. Gemäß einer bevorzugten Ausführungsform wird dabei der Rauchgasstrom nach einer Zeit von etwa 1 bis 20 Minute, vorzugsweise 3 bis 5 Minuten auf den anderen Regenerator umgeschaltet.

Gemäß einer besonders vorteilhaften Ausführungsform des erfindungsgemäßen Verfahrens wird ein in mehrere Schichten unterteiltes Katalysatorbett verwendet. Dies kommt insbesondere dann zur Anwendung, wenn bei engen Platzverhältnissen die erforderliche Fläche für das Katalysatorbett bei gegebener Raumgeschwindigkeit und Lineargeschwindigkeit nicht zur Verfügung steht. Dann vergrößert die erfindungsgemäße Verwendung mehrerer Katalysatorschichten den Anströmquerschnitt, d.h. die Oberfläche des Bettes, da die Summe der Oberflächen der einzelnen Schichten größer als die Querschnittsfläche des Strömungsweges ist. Die Katalysatorschichten können dabei hintereinander und/oder nebeneinander angeordnet sein. Bei Serienanordnung ist es vorteilhaft, wenn sich die Katalysatorschichten zumindest teilweise überlappen. Bei dieser Anordnung liegen die Katalysatorschichten mit Abstand zueinander in verschiedenen Ebenen senkrecht zur Durchströmungsrichtung des Rauchgases, wobei zumindest Abschnitte der Katalysatorschichten miteinander zur Deckung kommen.

Es ist dabei von Vorteil, wenn, wie weiter vorgeschlagen wird, der Rauchgasstrom hintereinander durch die Katalysatorschichten geleitet wird. Weiterhin besteht aber auch die Möglichkeit, den Rauchgasstrom in Teilströme zu unterteilen, die getrennt voneinander den Katalysatorschichten zugeführt werden. Dies bedeutet, daß das Rauchgas sowohl in parallele Ströme aufgeteilt und über die Katalysatorschichten geleitet als auch hintereinander über die Schichten geführt werden kann.

Nach einer weiteren vorteilhaften Ausführungsform des Erfindungsgedankensvorgesehen, daß die Strömungsrichtung im Regenerator, am Katalysator oder zwischen Regenerator und Katalysator umgelenkt werden kann. Auf diese Weise wird ermöglicht, daß Regenerator und/oder Katalysator sowohl waagrecht als senkrecht durchströmt werden können.

Insgesamt bestehen somit für die Verfahrensführung mehrere Möglichkeiten: Das Rauchgas kann nach Durchgang durch den Regenerator den Katalysator (die Katalysatorschichten) nacheinander durchströmen und zurück zu dem Regenerator geleitet und abgezogen werden; oder über einen zweiten Regenerator geleitet und abgezogen werden; oder über einen zweiten Katasalysator (zweite Katalysatorschichten) und einen zweiten Regenerator geleitet und abgezogen werden. Das Rauchgas kann auch nach Durchgang durch den in parallelen Teilströmen Katalysatorschichten durchströmen und dann wie erwähnt, weitergeleitet und abgezogen werden.

Als besonders zweckmäßig hat es sich dabei erwiesen, den Katalysator (Katalysatorschichten) und Regenrator derart anzuordnen, daß der Katalysator unterhalb der Wärmetauscher liegt, um so auf einfache Art bei anfallenden Wartungsarbeiten zugänglich zu sein.

Das erfindungsgemäße Verfahren bietet den Vorteil, daß ein kostengünstiger Katalysator bei optimal wählbarer Reaktionstemperatur verwendet werden kann, dessen Lebensdauer erhöht ist da keine schädigenden Verunreinigungen im Gasstrom mehr vorhanden sind. Bei Lastschwankungen ist die $NH_3$-Zuspesung im Vergleich zu dem bekannten Verfahren besser regulierbar, da hierbei der Temperatureinfluß klein gehalten werden kann.

Zur Umwandlung von Stickoxiden kommen die an sich bekannten Katalysatoren zur Anwendung, wie z. B. Zeolithe oder Vanadiumoxid/Titanoxid auf Träger oder Edelmetallkatalysatoren auf Träger. Je nach verwendetem Katalysator wird dabei das Rauchgas auf die für die Umsetzung auf dem Katalysator notwendige Temperatur angewärmt. Bevorzugt liegt diese Temperatur zwischen 250° C und 400° C. Diese Temperaturen sind aus dem Grund ausreichend, da der Katalysator nichts von seiner Aktivität durch andere Verunreinigungen einbüßt. Dabei kann das $SO_2$-freie Rauchgas in einem ersten Wärmetauscher auf die Temperatur vor der $SO_2$-Entfernung erwärmt werdend z. B. im wärmetausch zu abzukühlendeß Rauchgas. In einem zweiten Wärmetauscher erfolgt dann die weitere Anwärmung auf 250° C bis 400° C.

Die Wärmeverluste bei nicht vollständigem Wärmeaustausch werden mit Hilfe einer beliebigen Wärmequelle gedeckt. Hierbei wird insbesondere heißes Rauchgas als Wärmequelle verwendet. Das Rauchgas kann dabei z. B. durch Verbrennung hochkalorischer Brennstoffe in einer Brennkammer erzeugt und von außen zugeführt oder direkt durch Verbrennung hochkalorischer-Brennstoffe im Reaktor erzeugt werden. Dabei reicht meist eine kleine Rauchgasmenge aus, um die Verluste zu decken. Natürlich können die Wärmeverluste auch durch andere Wärmequellen, wie elektrische Beheizung oder durch in einem Wärmetauscher kondensierenden Dampf gedeckt werden. Hierbei besteht sowohl die Möglichkeit, die

Wärme auf einer als auch auf beiden Seiten des Katalysatorbettes zuzuführen. Überdies ist es denkbar, zumindest einen Teilstrom des Rauchgases vor Überleiten über den Katalysator aus dem Reaktor abzuziehen und nach Anwärmung in der Abzugsleitung auf den Katalysator aufzugeben.

Die Erfindung betrifft überdies eine verbesserte Vorrichtung der eingangs genannten Art. Eine solche Vorrichtung, die schon aus der DE-A-3 117 077 bekannt ist, ist gemäß der Erfindung durch mindestens einen weiteren dem Katalysatorbett strömungsmäßig vorgeschalteten Regenerator gekennzeichnet. Damit ergibt sich folgender Aufbau: Eine Rauchgaszuführung ist mit mindestens einem ersten Wärmetauscher und dieser mit dem Katalysatorbett verbunden. An das Katalysatorbett ist eine Gasableitung angeschlossen, die mit mindestens einem weiteren Wärmetauscher verbunden ist.

In äußerst vorteilhafter Ausgestaltung der erfindungsgemäßen Vorrichtung ist weiterhin vorgesehen, daß das Katalysatorbett in mehrere Schichten unterteilt ist. Diese Schichten sind vorteilhaft horizontal angeordnet, wobei in Strömungsrichtung des Rauchgases sowohl mehrere Schichten hintereinander als auch nebeneinander angeordnet sein können. Somit besteht einmal die Möglichkeit, daß ein Teil der Schichten stufenartig versetzt übereinander angeordnet ist als auch zum anderen, daß die Schichten deckungsgleich übereinander angeordnet sind.

Nach einer weiteren Ausgestaltungsform der erfindungsgemäßen Vorrichtung ist das Katalysatorbett am heißen Ende des Regenerators angeordnet. Dabei können das Katalysatorbett und die Wärmespeichermasse in einem doppelflutigen Regenerator angeordnet sein. Katalysatorbett und Regenerator werden dabei als ein System betrachtet. Im doppelflutigen Regenerator sind zwei derartige Systeme so angeordnet, daß die Regenerator jeweils an dem oberen bzw. unteren Abschnitt vorgesehen sind, während im mittleren Abschnitt des Regenerators die Katalysatorbetten liegen. Zwischen den beiden Systemen ist zweckmäßig eine Zwischenwand angeordnet. Diese Anordnung spart Grundfläche sowie teure Verrohrung.

Alternativ und in bevorzugter Weise sind die Regenerator hintereinander und das Katalysatorbett vor oder nach den Regenerator angeordnet. Bei dieser Ausgestaltungsform wird somit das Rauchgas einem Regenerator zugeführt sodann über den Katalysator und den zweiten Regenerator geleitet. Im nächsten Zyklus wird das Rauchgas zuerst über den zuletzt durchströmten Regenerator, dann den Katalysator und schließlich den jetzt zweiten Regenerator geleitet.

In besonders günstiger Weise sind dabei die beiden Regenerator und das Katalysatorbett in einem einzigen Behälter mit bevorzugt rechteckiger Grundfläche angeordnet.

In der vorbeschriebenen Anordnung wird das Katalysatorbett in zwei aufeinanderfolgenden Zyklen in verschiedenen Richtungen durchströmt. Oftmals erweist es sich jedoch als zweckmäßiger, das Katalysatorbett immer nur in einer Richtung zu durchströmen. Hierzu ist erfindungsgemäß vorgesehen, daß zwischen den Regenerator und dem Katalysator eine Armatur zur Umschaltung der Strömungsrichtung des Rauchgases angeordnet ist. Somit wird das Rauchgas unabhängig davon, in welchem Regenerator es angewärmt wird, mittels der Schaltarmatur, beispielsweise einer Vierwegklappe, immer so geleitet, daß es den Katalysator stets nur in einer einzigen Richtung durchströmt. Bei dieser Anordnung ist eine einseitige Beheizung des Katalysators vorteilhaft.

Bei der erfindungsgemäßen Anordnung ist weiterhin vorteilhaft, in der Gaszuleitung eine Einrichtung zur Umschaltung der Strömungsrichtung vorgesehen, die beispielsweise ebenfalls als Vierwegklappe ausgebildet sein kann. Diese Einrichtung dient zur Umschaltung anzuwärmenden Rauchgases auf den jeweiligen Wärmetauscher.

Das erfindungsgemäße Verfahren und die erfindungsgemäße Vorrichtung lassen sich allgemein bei allen Rauchgasreinigungsanlagen einsetzen.

Im folgenden sei die Erfindung anhand eines in drei Figuren schematisch dargestellten Ausführungsbeispiels näher erläutert.

Es zeigen:

Figur 1 doppelflutiger Reaktor mit zwei Katalysatorschüttungen und

Figur 2 doppelflutiger Reaktor mit einer Katalysatorschüttung.

Figur 3 bevorzugte Ausführungsform des Katalysatorbettes in schematischer Querschnittsdarstellung.

Gemäß Figur 1 werden über Leitung 213 000 $Nm^3/h$ eines Rauchgases herangeführt und in einem Gebläse auf etwa 1,6 bar verdichtet. Das Rauchgas enthält keinen Staub, Ruß, HF und/oder HCl (in vorgeschalteter Anlage vorgereinigt oder grundsätzlich nicht enthalten) und ist von $SO_2$ und $SO_3$ abgereichert. Das Rauchgas hat eine Temperatur von ca. 30°C. Es enthält noch etwa 500 vppm NO.

Das verdichtete Rauchgas wird mittels einer Vierwegklappe 4 über Leitung 5 einem Reaktor 6 zugeleitet.

Der Reaktor 6 ist als doppelflutiger Regenerator ausgebildet. Er weist eine untere Regeneratorfüllung 7 mit darüber angeordneter Katalysatorschüttung 8, eine Zwischenwand 9 sowie eine weitere Katalysatorschüttung 10 und Regeneratorfüllung 11 auf. Als Regeneratorfüllung ist Keramikschüttgut verwendet.

Im vorliegenden Ausführungsbeispiel wird das $NO_x$-haltige Rauchgas der Regeneratorfüllung 7 zugeführt und in dieser auf eine Temperatur von 300°C angewärmt. Dem angewärmten Rauchgas wird vor Zuführung zur Katalysatorschüttung über

Leitung 3 $NH_3$ stöchiometrisch in einem Verhältnis von ungefähr 1 : 1 (bezogen auf NO) zugeführt. Das Gemisch gelangt sodann über die Katalysatorschüttung 8 und wird zu 90 % zu $N_2$ und Wasser konvertiert, so daß im gereinigten Gas noch ca. 28 vppm NO vorhanden sind. Dieser Wert liegt dabei erheblich unter den gesetzlich erlaubten Werten für den maximalen Ausstoß an Stickoxiden in die Atmosphäre.

Das gereinigte Gas gelangt sodann über die gasdurchlässige Zwischenwand 9 in das andere System, das in einem vorangegangenen Schaltzyklus mit Rauchgas beaufschlagt worden ist. Nach Durchströmen der Katalysatorschüttung 10 gibt das heiße gereinigte Gas seinen Wärmeinhalt an die kalte Regeneratorschüttung 11 ab und verläßt den Regenerator 6 über Leitung 12 mit einer Temperatur von etwa 40° C. Ober die Vierwegklappe 4 wird das Gas über Leitung 13 abgegeben. Nach einer Zeit von etwa 4 Minuten schaltet die Vierwegklappe 4 derart um, daß das zu reinigende Rauchgas über Leitung 12 in den Reaktor 6 eintritt und über Leitung 5 abgezogen wird. Diese Möglichkeit ist durch die zusätzlichen Pfeile angedeutet.

Um Wärmeverluste in dem Reaktor auszugleichen, ist überdies ein Brenner 14 vorgesehen, der über Leitung 15, 16 mit z. B. Erdgas und Luft versorgt wird und in dem ein Rauchgas entsteht, das über Leitung 17 den Regeneratorfüllungen zugeführt werden kann, um diese auf die erforderlichen Temperaturen aufzuheizen.

Beim Ausführungsbeispiel der Figur 2 sind gleiche Teile wie in Figur 1 mit gleichen Bezugszeichen versehen.

Im Unterschied zum Beispiel der Figur 1 weist gemäß Figur 2 der Reaktor 6 nur eine Katalysatorschüttung 18 auf. Überdies kann zur Deckung von Wärmeverlusten ein Heißgas über Leitung 19 verwendet werden.

Auch bei diesem Ausführungsbeispiel wird das $NO_x$-haltige Rauchgas der Regeneratorschüttung 7, (Keramikschüttung), zu geführt und auf etwa 300° C angewärmt. Nach Zuspeisung von $NH_3$ über Leitung 3 gelangt das Gas über die Katalysatorschüttung 18 und wird zu $N_2$ und Wasser konvertiert, so daß im gereinigten Gas noch ca. 28 vppm NO vorhanden sind.

Das gereinigte Gas gelangt sodann über die kalte Regeneratorschüttung 11, gibt dort seinen Wärmeinhalt ab und verläßt den Regenerator über Leitung 12 mit einer Temperatur von etwa 40° C. Ober die Vierwegklappe 4 wird das Gas über Leitung 13 abgegeben.

Auch hier schaltet die Vierwegklappe 4 nach einer Zeit von etwa 4 Minuten derart um, daß das zu reinigende Rauchgas über Leitung 12 in den Reaktor 6 eintritt und über Leitung abgezogen wird. Diese Möglichkeit ist hier ebenfalls durch zusätzliche Pfeile'angedeutet.

Der gesamte Energieaufwand für das erfindungsgemäße Verfahren setzt sich zusammen aus dem Energieaufwand für das Rauchgasgebläse von ca. 1800 MJ (500 kW/h) (ungefähr DM 50,-/h) und den für die zusätzliche Anwärmung der Regeneratorfüllung von ca. 1,4 · 4,184 KJ/h (1,4 Gcal/h) (ungefähr DM 70,-/hJ, so daß ein Gesamtbetrag für den Energieaufwand von stündlich DM 120,- veranschlagt werden muß. Dieser liegt erheblich unter dem für bekannte Verfahren, die sich auf etwa DM 180,-/h bis DM 400,-/h belaufen.

Figur 3 zeigt einen Strömungsweg 20, in dem stufenförmig angeordnete horizontale Katalysatorschichten 21 angeordnet sind, die einander in Strömungsrichtung gesehen teilweise überlappen. Der zu behandelnde Rauchgasstrom ist durch Pfeile 23 engedeutet. Diese Anordnung stellt eine bevorzugte Ausführungsform des Katalysators gemäß Figuren 1 und 2 dar. Die Katalysatorschichten können hierbei als Schüttungen ausgebildet sein, wobei die Katalysatormasse teilchenförmig, zum Beispiel ring- oder sternförmig ausgebildet ist. Es besteht auch die Möglichkeit, wabenförmige Katalysatoren einzusetzen.

Zwischen den Katalysatorschichten 21 sind Trennwände 22 vorgesehen, die sich jeweils vom Innenrand der einen zum Außenrand der nächsthöheren Katalysatorschicht erstrecken. Die Katalysatorschichten 21 sowie die Trennwände 22 sind symmetrisch zur Mittelachse des Strömungsweges 20 angeordnet. Die Summe der Oberfläche der Katalysatorschichten ist größer als die Querschnittsfläche des Strömungsweges 20.

## Patentansprüche

1. Verfahren zur Entfernung von Stickoxiden aus einem bei der Verbrennung anfallenden Rauchgas, bei dem das Rauchgas abgekühlt, vorgereinigt und an $SO_2$ abgereichert wird, wobei das so vorbehandelte Rauchgas in zumindest einem Regenerator angewarmt, mit $NH_3$ versetzt und über ein zur Umwandlung von Stickoxiden geeignetes Katalysatorbett geleitet wird, woraufhin das gereinigte heiße Rauchgas über mindestens einen weiteren Regenerator geleitet und gekühlt abgegeben wird.

2. Verfahren nach Anspruch 1, dadurch gekennzeichnet, daß das Rauchgas auf eine Temperatur zwischen 250° C und 400° C angewärmt wird.

3. Verfahren nach einem der Anspruche 1 oder 2, dadurch gekennzeichnet, daß Wärmeverluste zusätzlich mit Hilfe einer beliebigen Wärmequelle gedeckt werden.

4. Verfahren nach Anspruch 3, dadurch gekennzeichnet, daß als Wärmequelle heißes Rauchgas verwendet wird.

5. Verfahren nach Anspruch 3 oder 4, dadurch gekennzeichnet, daß das Katalysatorbett auf einer Seite beheizt wird.

6. Verfahren nach Anspruch 3 oder 4, dadurch gekennzeichnet, daß das Katalysatorbett auf beiden Seiten beheizt wird.

7. Verfahren nach einem der Ansprüche 1 bis 6, dadurch gekennzeichnet, daß der Rauchgasstrom nach einer Zeit von 1 bis 20 Minuten, vorzugsweise 3 bis 5 Minuten auf den anderen Regenerator umgeschaltet wird.

8. Vorrichtung zur Entfernung von Stickoxiden aus einem bei einer Verbrennung anfallenden Rauchgas mit einem Katalysatorbett und mindestens einem dem Katalysatorbett nachgeschalteten Regenerator, wobei das Katalysatorbett mit mindestens einer $NH_3$-Zuleitung verbunden ist, und die Regeneratoren eine keramische Wärmespeichermasse aufweisen, gekennzeichnet durch mindestens einen weiteren dem Katalysatorbett strömungsmäßig vorgeschalteten Regenerator.

9. Vorrichtung nach Anspruch 8, dadurch gekennzeichnet, daß zwischen den Regeneratoren und dem Katalysator eine Armatur zur Umschaltung der Strömungsrichtung des Rauchgases angeordnet ist.

10. Vorrichtung nach einem der Ansprüche 8 oder 9, dadurch gekennzeichnet, daß in einer mit den Regeneratoren verbundenen Rauchgaszuleitung eine Einrichtung zur Umschaltung der Strömungsrichtung des Rauchgases angeordnet ist.

## Claims

1. A method for removing nitric oxides from a flue gas resulting from combustion in which the flue gas is cooled, undergoes a preliminary purification and its $SO_2$ content is reduced, where the flue gas pre-treated in this way is heated in at least one regenerator, mixed with $NH_3$ and passed through a catalyst bed suitable for the conversion of nitric oxides, whereupon the purified hot flue gas is passed through at least one more regenerator and cooled and discharged.

2. A method as claimed in Claim 1, characterised in that the flue gas is heated to a temperature of between 250° and 400° C.

3. A method as claimed in one of Claims 1 or 2, characterised in that heat losses are additionally covered with the aid of a heat source selected at will.

4. A method as claimed in Claim 3, characterised in that hot flue gas is used as the heat source.

5. A method as claimed in Claim 3 or 4, characterised in that the catalyst bed is heated on one side.

6. A method as claimed in Claim 3 or 4, characterised in that the catalyst bed is heated on both sides.

7. A method as claimed in one of Claims 1 to 6, characterised in that the stream of flue gas is switched over to the other regenerator after a period of 1 to 20 minutes, preferably 3 to 5 minutes.

8. Apparatus for removing nitric oxides from a flue gas resulting from combustion comprising a catalyst bed and at least one regenerator downstream of the catalyst bed, wherein the catalyst bed is connected to at least one $NH_3$ supply pipe and the regenerators have a ceramic heat storage mass, characterised by at least one further regenerator connected upstream of the catalyst bed.

9. Apparatus as claimed in Claim 8, characterised in that a fitting to change the direction of flow of the flue gas is disposed between the regenerators and the catalyst.

10. Apparatus as claimed in one of Claims 8 or 9, characterised in that a device to change the direction of flow of the flue gas is disposed in a flue gas supply pipe connected to the regenerators.

## Revendications

1. Procédé pour éliminer les oxydes d'azote contenus dans des gaz de fumée résultant d'un processus de combustion, dans lequel on refroidit les gaz de fumée, on les soumet à une pré-purification et on diminue leur teneur en $SO_2$, puis on réchauffe les gaz de fumée ainsi prétraités dans au moins un régénérateur, on y ajoute du $NH_3$ et on les fait passer ensuite sur un lit de catalyseur propre à transformer les oxydes d'azote, après foi on fait passer les gaz de fumée chauds et purifiés sur au moins un autre régénérateur avant de les évacuer après les avoir refroidis.

2. Procédé selon la revendication 1, caractérisé en ce qu'on réchauffe les gaz de fumée à une température comprise entre 250° C et 400° C.

3. Procédé selon la revendication 1 ou 2, caractérisé en ce qu'on compense, en outre, des pertes de chaleur éventuelles en utilisant une source de chaleur quelcone.

4. Procédé selon la revendication 3, caractérisé en ce qu'on utilise, en tant que source de chaleur, des gaz de fumée chauds.

5. Procédé selon la revendication 3 ou 4, caractérisé en ce que l'on chauffe le lit de catalyseur sur un côté.

6. Procédé selon la revendication 3 ou 4, caractérisé en ce qu'on chauffe ledit lit de catalyseur sur les deux côtés.

7. Procédé selon une des revendications 1 à 6, caractérisé en ce qu'on commute après un laps de temps de 1 à 20 minutes, et de préférence de 3 à 5 minutes, le courant de gaz de fumée vers l'autre régénérateur.

8. Dispositif pour éliminer les oxydes d'azote des gaz de fumée résultant d'un processus de combustion, comportant un lit de catalyseur et au moins un régénérateur disposé en aval dudit lit de catalyseur, ce dernier étant relié à au moins une conduite d'amenée de $NH_3$, et lesdits régénérateurs comprenant une masse céramique accumulatrice de chaleur, caractérisé en ce qu'il comporte au moins un régénérateur

supplémentaire disposé en amont dudit lit de catalyseur.

9. Dispositif selon la revendication 8, caractérisé en ce qu'il comporte, entre lesdits régénérateurs et le catalyseur précité, des moyens d'inversion de la direction d'écoulement des gaz de fumée.

10. Dispositif selon la revendication 8 et 9, caractérisé en ce qu'il comporte des moyens d'inversion de la direction d'écoulement des gaz de fumée, oui sont disposés dans une conduite d'amenée de gaz de fumée reliée auxdits régénérateurs.

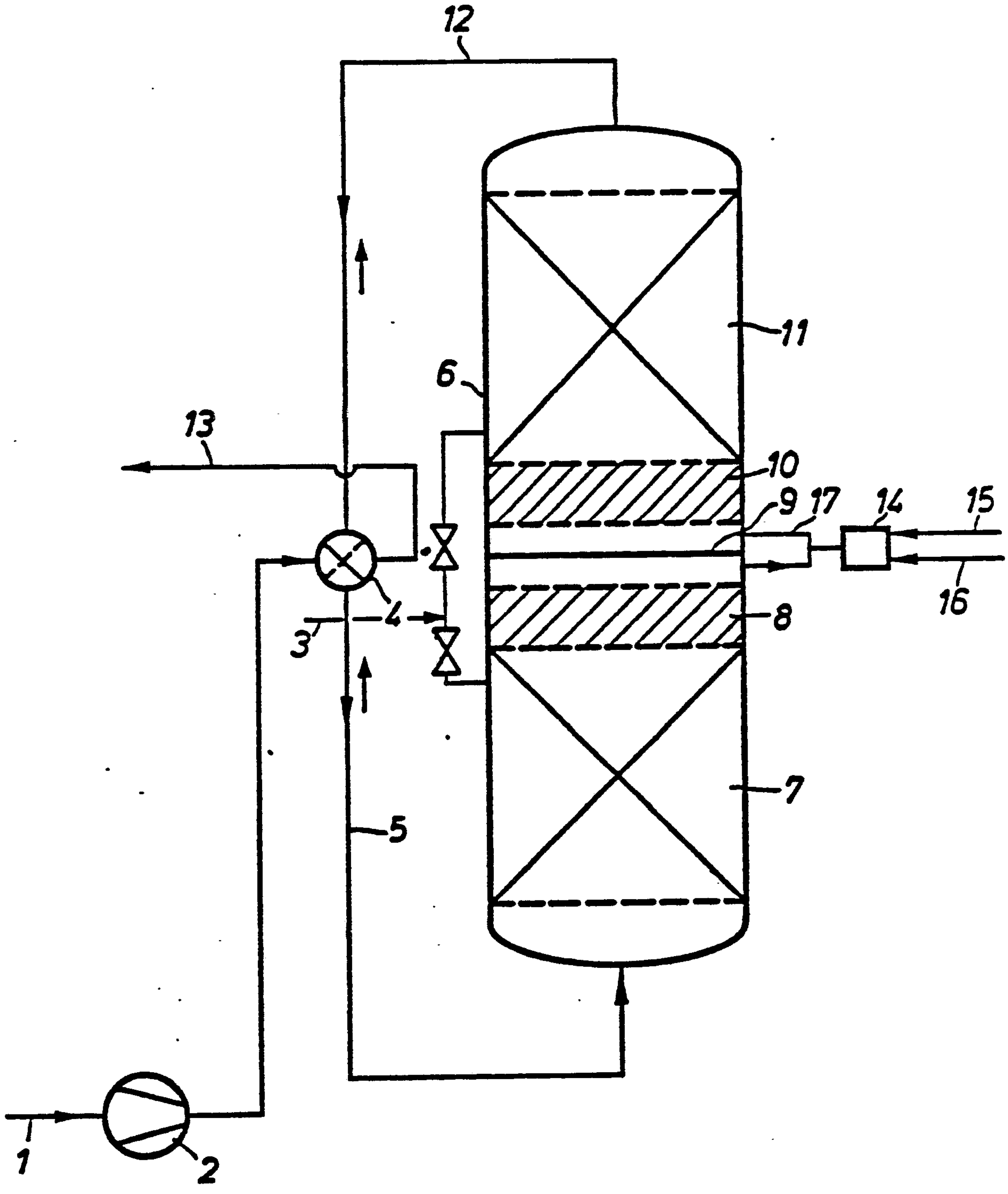


Fig.1

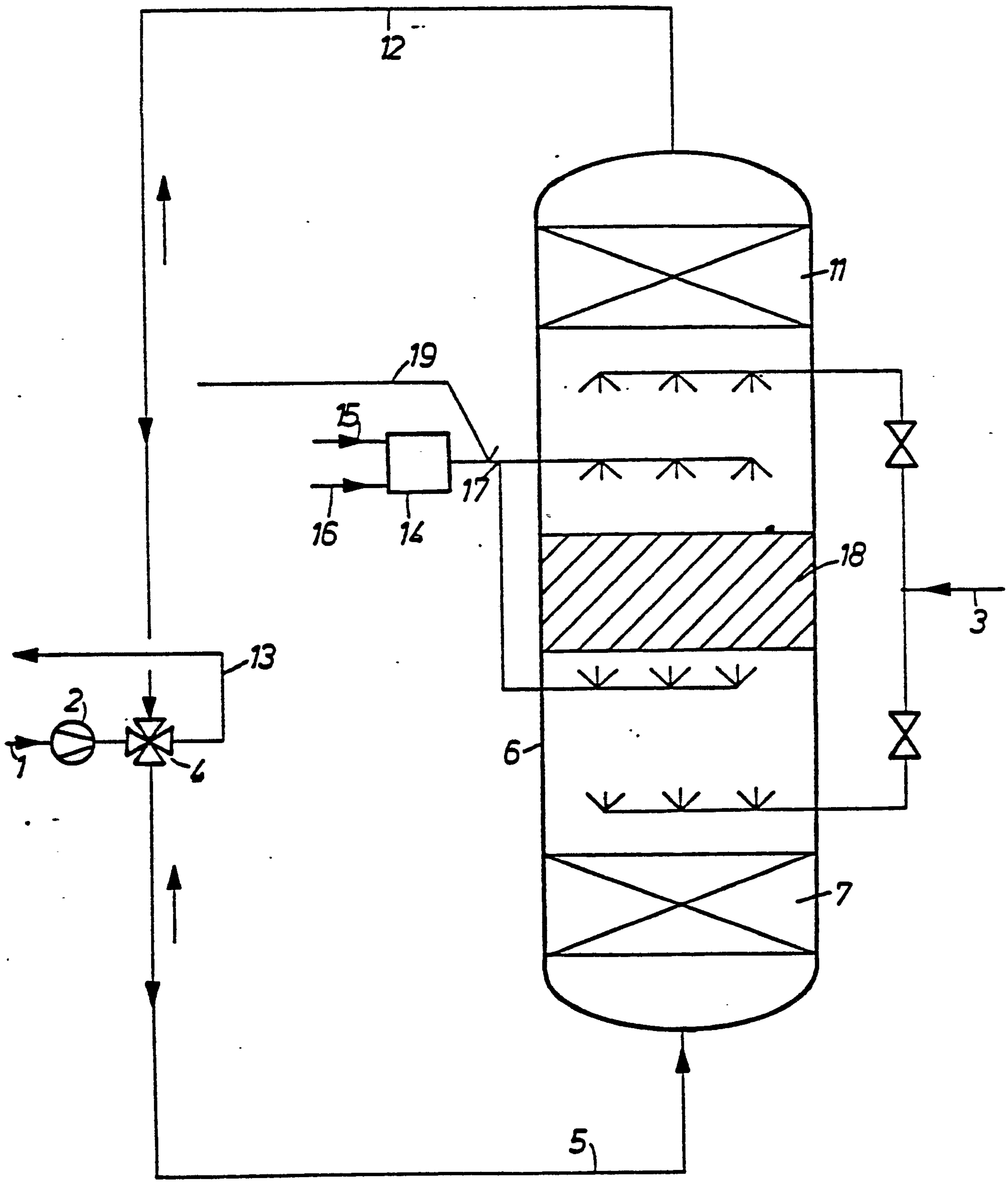


Fig.2

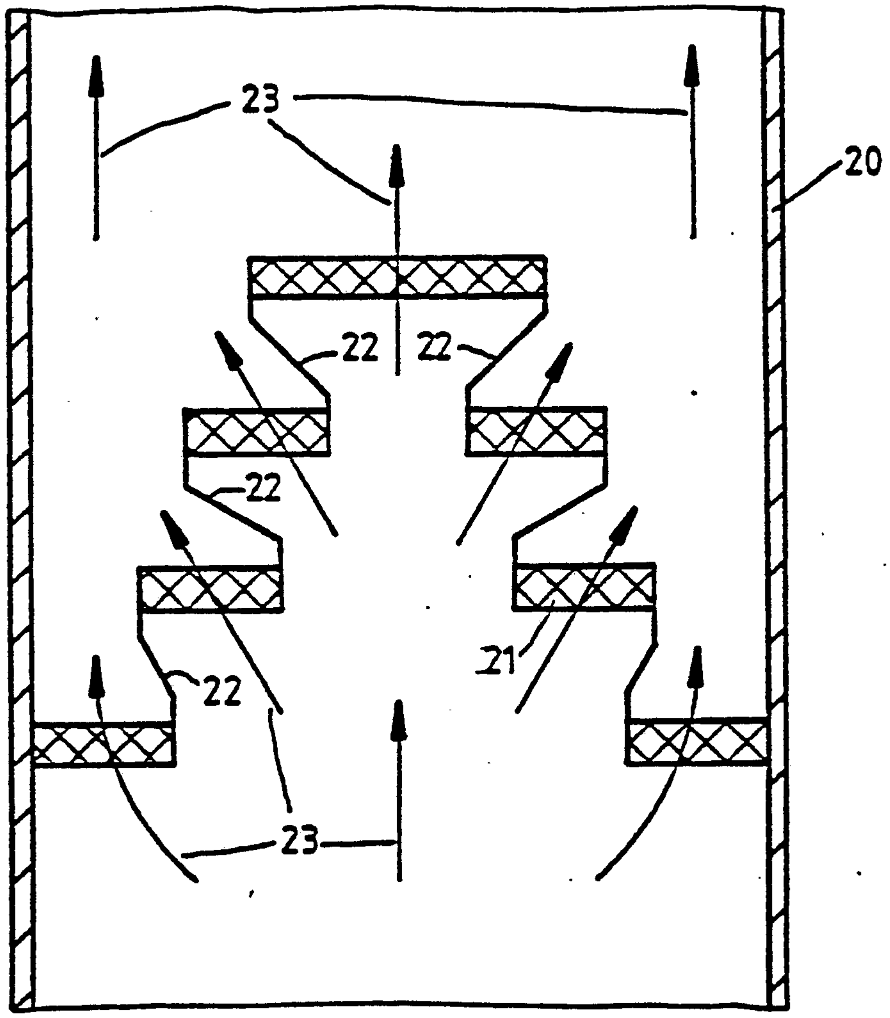


Fig. 3